## Europäisches Patentamt
## European Patent Office
## Office européen des brevets

(11) Veröffentlichungsnummer: **0 191 413 B1**

# (12) EUROPÄISCHE PATENTSCHRIFT

(45) Veröffentlichungstag der Patentschrift: **18.12.91**

(51) Int. Cl.5: **G07C 5/10**

(21) Anmeldenummer: **86101501.4**

(22) Anmeldetag: **05.02.86**

(54) **Fahrtschreiber für Kraftfahrzeuge.**

(30) Priorität: **14.02.85 DE 3505068**

(43) Veröffentlichungstag der Anmeldung:
**20.08.86 Patentblatt 86/34**

(45) Bekanntmachung des Hinweises auf die
Patenterteilung:
**18.12.91 Patentblatt 91/51**

(84) Benannte Vertragsstaaten:
**AT CH DE FR GB IT LI NL SE**

(56) Entgegenhaltungen:
**EP-A- 0 020 158**     **EP-A- 0 129 949**
**WO-A-82/02785**     **DE-A- 3 010 681**
**DE-A- 3 240 773**     **DE-A- 3 319 115**
**DE-A- 3 319 881**     **DE-A- 3 407 954**
**US-A- 4 338 512**

(73) Patentinhaber: **Mannesmann Kienzle GmbH**
**Heinrich-Hertz-Strasse**
**W-7730 Villingen-Schwenningen(DE)**

(72) Erfinder: **Mutz, Gerhard**
**Waldstrasse 23**
**W-7734 Brigachtal(DE)**

**Beschreibung**

Die Erfindung betrifft einen Fahrtschreiber für Kraftfahrzeuge, mit einem Mikroprozessor zur Ermittlung von Fahrtdaten wie Strecke und Geschwindigkeit, aus Gebersignalen, mit einem mit dem Mikroprozessor verbundenen Uhrzeit-Datum-Geber zur Lieferung von Arbeitszeitdaten, wie Lenkzeit oder Ruhezeit etc., mit den Fahrern zugeordneten und in den Fahrtschreiber einführbaren Datenkarten und mit einer Druckvorrichtung

Aufgabe der für bestimmte Kraftfahrzeugkategorien gesetzlich vorgeschriebenen Fahrtschreiber ist es bekanntlich, Transportleistungen kennzeichnende Daten derart zu erfassen, daß diese Daten den Interessen der Fahrer, der Transportunternehmer und der behördlichen Kontrollorgane in ausreichendem Maße gerecht werden, d. h. daß die erfaßten Daten den Fahrern einen jederzeit leicht, also ohne technischen Aufwand lesbaren Leistungs- bzw. Arbeitszeitnachweis bieten, den für einen Fuhrpark Verantwortlichen eine problemlose Überwachung hinsichtlich des wirtschaftlichen Einsatzes der Fahrzeuge und die sich daraus ergebenden organisatorischen Konsequenzen ermöglichen und den behördlichen Kontrollorganen bei deren im allgemeinen stichprobenweisen Kontrollen einen raschen Überblick über Fahrverhalten und die Einhaltung der Arbeitszeitrichtlinien, der sog. Sozialvorschriften, gestatten.

Zweifellos können diese Forderungen von den heute in Fahrtschreibern als Datenträger verwendeten Diagrammscheiben, die das lästige Führen von Fahrtenbüchern abgelöst haben, und auf denen uhrzeitrichtig Fahrzeugdaten, d. h. Geschwindigkeiten, zurückgelegte Strecken, Kraftstoffverbräuche und Motordrehzahlen sowie Arbeitszeitdaten, d. h. Lenkzeiten, Bereitschaftszeiten und Ruhezeiten in analoger Form lückenlos aufgezeichnet sind, nicht in allen Punkten erfüllt werden. Dabei sind Diagrammscheiben an sich leicht zu handhabende, ohne weiteres archivierfähige und jederzeit visuell lesbare sowie mit allerdings erheblichem Aufwand auch maschinell auswertbare Dokumente mit hoher Aussagefähigkeit. Der Datenträger "Diagrammscheibe" zeichnet sich ferner dadurch aus, daß sämtliche Fahrtdaten eines Transportauftrages, einer Schicht oder eines Arbeitstages sozusagen auf einen Blick überschaubar sind, insbesondere aber dadurch, daß er als personen- bzw. fahrerbezogener Datenträger in besonderer Weise den Anforderungen im Kfz-Transportwesen bzgl. Fahrerplatz- und Fahrzeugwechsel angepaßt ist.

Die Schwächen des Datenträgers "Diagrammscheibe" liegen vor allem in den Aufzeichnungen selbst und zeigen sich dann, wenn man bei stichprobenweisen Kontrollen, beispielsweise der einzuhaltenden Ruhezeiten, einigermaßen verläßliche Zahlen aus den auf den Diagrammscheiben in analoger Form aufgezeichneten Fahrtdaten gewinnen will. Um Zählfehler zu vermeiden, ist dies nur mit einem gewissen Zeitaufwand und einiger Auswerteerfahrung möglich. Praktisch unmöglich ist aber die Vor-Ort-Ermittlung des Geschwindigkeitsverlaufs eines Fahrzeuges vor einer Unfallsituation, da bekanntlich die durch eine Diagrammscheiben-Umlaufzeit von 24 h bedingte relativ geringe Auflösung der Geschwindigkeitsaufzeichnungen eine hohe Auswerteerfahrung und aufwendige Meßmittel erfordert.

Mit diesem aus praktischen Gründen verständlichen Kompromiß, nämlich der Festlegung des Registrierzeithorizontes der Diagrammscheiben auf 24 h, muß jedoch als weiterer Nachteil die gesetzliche Forderung in Kauf genommen werden, daß vom Fahrpersonal die Diagrammscheiben der beiden jeweils vorhergegangenen Tage vorweisbar sein müssen.

Außerdem entspricht die Fahrtdatenerfassung mittels Diagrammscheiben in keiner Weise modernen Vorstellungen über die Handhabung eines Datenträgers, so daß es auch aus dieser Sicht verständlich ist, wenn dem Fahrtschreiber vom Fahrtpersonal im allgemeinen wenig Sympathie entgegengebracht wird. Abgesehen davon, daß vor dem Einlegen einer Diagrammscheibe in den Fahrtschreiber wenigstens die persönlichen Daten des Fahrers handschriftlich eingetragen werden müssen, ist der Fahrtschreiber zu öffnen, die Diagrammscheibe auf den Zentrier- und Mitnahmedorn aufzufädeln und der Deckel des Fahrtschreibers wieder zu schließen, sofern der Fahrtschreiber mit einer beim Schließen des Deckels selbsttätig wirksam werdenden Diagrammscheibenfesthalteeinrichtung ausgerüstet ist. Ist das Fahrzeug entsprechend seiner Tonnage oder seines Transportauftrages zusätzlich mit einem Beifahrer besetzt, so wird das Einlegen der erforderlichen zwei Diagrammscheiben bereits zu einer relativ aufwendigen Einlegeprozedur, d. h. morgens im kalten und meist schwach beleuchteten Fahrerhaus zu einer ziemlich lästigen Pflicht. Hinzu kommt, daß die Handhabung der Diagrammscheiben, die wegen der für die Unfallauswertung erforderlichen hochfeinen Geschwindigkeitsregistrierspur bekanntlich mit einer Registrierschicht augestattet sind, die den Nachteil hat, kratz- und druckempfindlich zu sein, einige Sorgfalt erfordert.

Mit der EP-A-0 129 949 ist ein Fahrzeug-Datenerfassungssystem bekannt geworden, welches einen Drucker und andere Datenausgabegeräte umfaßt. Dieses Fahrzeug-Datenerfassungssystem hat jedoch den Nachteil, daß es durch eine Vielzahl von Einzelgeräten einen erheblichen Anordnungs- bzw. Einbauraum im Armaturenbrett des betreffenden Fahrzeuges erfordert und daß der durch den Drucker gelieferte Ausdruck bezüglich der Handhabung und Datendarstellung keine Äquivalenz zum Datentrtäger Diagrammscheibe

2

besitzt. Auch ist mit dem Fahrzeug-Datenerfassungssystem gemäß der vorstehend genannten Patentanmeldung ein fahrtschreiberidentischer Betrieb, bei dem jedem Fahrer ein Datenträger zugeordnet ist, welcher die Fahrt- und Arbeitszeitdaten trägt, nicht möglich.

Demgegenüber zeigt die US-A-4 338 512 eine Lösung, bei der jedem Fahrer ein Arbeitszeitrechner in Kartenform zugeordnet ist. Dabei ist, um die Lenkzeiten ermitteln zu können, das die Arbeitszeitrechner aufnehmende Gerät mit dem Zündschalter des betreffenden Fahrzeuges und mit lediglich einem Bewegungssensor verknüpft, d. h. es werden mit diesem Gerät weder die Fahrtdaten ermittelt, noch ein den Diagrammscheibenregistrierungen entsprechender Dateninhalt auf einem archivierbaren Datenträger zur Verfügung gestellt.

Ziel der vorliegenden Erfindung war es daher, einen Fahrtschreiber zu schaffen, der die Mängel der Diagrammscheibenregistrierung vermeidet, dem jedoch analog zur bisher üblichen Fahrtdatenerfassung Fahrerplatz- und Fahrzeugwechsel ermöglichende, fahrerbezogene Datenträger zugeordnet sind und der jederzeit eine uhrzeitrichtige Ausgabe der insbesondere für Fahrpersonal und Kontrollorgane wesentlichen Fahrtdaten, ohne daß zu deren Interpretation zusätzlich technischer Auswerteaufwand erforderlich ist, gestattet

Die Lösung dieser Aufgabe sieht vor, daß jede Datenkarte einen Datenspeicher aufweist, in den zusätzlich zu bereits eingespeicherten, fahrerspezifischen Daten auch die Fahrtdaten und die Arbeitszeitdaten einspeicherbar sind, daß Mittel vorgesehen sind, über die Änderungen des Arbeitszustandes eines Fahrers von Hand in den Fahrtschreiber eingebbar sind, die zusammen mit den vom Uhrzeit-Datum-Geber gelieferten Arbeitszeitdaten in den Datenspeicher der Datenkarte übertragen werden und daß durch Einziehen eines Druckträgers in einen frontseitig am Fahrtschreiber ausgebildeten Einzugsschacht der Ausdruck eines tabellarischen Fahrtprotokolls ausgelöst wird, dessen Daten aus dem Datenspeicher der Datenkarte ausgelesen werden.

Ein bevorzugtes Ausführungsbeispiel des erfindungsgemäßen Fahrtschreibers ist dadurch gekennzeichnet, daß ein quaderförmiges Einbaugehäuse vorgesehen ist, daß der dem Druckträger zugeordnete Einzugsschacht im wesentlichen in einer Ebene quer zur Hochachse des Einbaugehäuses angeordnet ist und daß zwei den Datenkarten von Fahrer und Beifahrer zugeordnete Aufnahmeschächte in einer zum Einzugsschacht parallelen Ebene ausgebildet sind.

Die Erfindung löst die gestellte Aufgabe zufriedenstellend und mit einem überraschend geringen Aufwand, insbesondere indem für die Fahrtdatenerfassung und die Fahrtprotokollausgabe lediglich ein Gerät erforderlich ist, welches aufgrund der gefundenen Anordnung insbesondere des Tastenfeldes, des Einzugsschachtes für den Druckträger und der den Datenkarten zugeordneten Aufnahmeschächte in besonderer Weise flach und somit für den Einbau in einem Armaturenbrett gut geeignet ist. Von Vorteil ist ferner, daß mit der gefundenen Lösung die an sich gewohnte Fahrtdatenerfassung mit mobilen, fahrerbezogenen Datenträgern im Prinzip beibehalten worden ist, so daß vom Fahrpersonal von den offensichtlichen Handhabungserleichterungen abgesehen kein nennenswerter Anpassungsaufwand an ein neues System gefordert wird.

Das jederzeit im Klartext, gegebenenfalls in maschinenlesbarer Form erstellbare und bezüglich der Interessen des Fahrpersonals, der Fuhrparkverantwortlichen und der behördlichen Kontrollorgane in Datenangebot und Datendarstellung optimierte Fahrtprotokoll bietet insbesondere dem Fahrpersonal - außer der Möglichkeit, den Geschwindigkeitsverlauf vor einem Unfall oder einer unfallähnlichen Situation selbst feststellen zu können - einen leicht lesbaren Arbeitszeit- und Leistungsnachweis, den für den Fuhrpark Verantwortlichen einen unmittelbaren und aufgrund des gegenüber den üblichen Diagrammscheiben erweiterten Zeithorizontes in vielen Fällen ausreichenden Überblick über das Fahrverhalten der Fahrer und die Auslastung bzw. die Einsatzzeiten der Fahrzeuge und den behördlichen Kontrollorganen die Möglichkeit einer Vor-Ort-Auswertung des Geschwindigkeitsverlaufs vor einem Unfall und der Erstellung eines Duplikates des Fahrtprotokolls, ohne daß hierfür zusätzliche technische Hilfsmittel erforderlich sind. Außerdem erleichtert das in besonderer Weise kontrollgerecht ausgebildete Fahrtprotokoll den Kontrollorganen das Prüfen der Einhaltung der Sozialvorschriften sowie der Höchstgeschwindigkeiten.

Erwähnt sei ferner, daß eine ohne besonderen Aufwand mögliche, fortlaufende Numerierung der Fahrtprotokolle, die durch eine behördliche Registrierung der Datenkarten ergänzt werden könnte, die bisher bestehende Manipulationsgefahr und das Verschwindenlassen von Fahrtprotokollen weitgehend verringert.

Ein weiterer Vorteil der erfindungsgemäßen Lösung ist auch darin zu sehen, daß das Fahrpersonal in jedem mit dem entsprechenden Fahrtschreiber ausgerüsteten Fahrzeug mittels der dem Fahrtschreiber zugeordneten Anzeigeeinrichtung nicht nur automatisch geführt wird, sondern jederzeit selbst sozusagen vorbeugende Informationen, insbesondere die besonders kritischen Arbeitszeitdaten, Tageslenkzeit, Tagesruhezeit und ununterbrochene Lenkzeit abrufen kann.

3

Im übrigen sei noch darauf hingewiesen, daß eine mit einem Halbleiterspeicher versehene Datenkarte im Vergleich mit einer ebenfalls denkbaren Magnetspeicher-Datenkarte einerseits eine höhere Speicherkapazität und mehr Stör- und Fälschungssicherheit aufweist und von den Steckkontakten abgesehen nicht mit dem Problem der Abriebfestigkeit belastet ist, andererseits keinen beweglichen Wandler für das Schreiben und Lesen der Daten erfordert. Dadurch sind im Falle eines Unfalles aufprallbedingte Überschreibungen, die z. B. bei der Diagrammscheiben-Registrierung exakte Auswertungen vielfach unmöglich machen, ausgeschlossen.

Erwähnt sei ferner, daß bereits bei Verwendung von derzeit im Handel verfügbaren Datenkarten mit 2k Byte-Datenspeichern der Zeithorizont der speicherbaren Arbeitszeitdaten und Geschwindigkeitswerte erheblich größer ist als er mit einem noch handlichen Fahrtprotokoll dargestellt werden kann und der Übersichtlichkeit wegen dargestellt werden soll. Dadurch und aufgrund der gefundenen Datenoptimierung stellt die Datenkarte, wenn beispielsweise bei ihrer Entnahme aus dem Fahrtschreiber zusätzlich noch verschiedene, fahrzeugspezifische Daten, z. B. der aktuelle Km-Stand, der Kraftstoffverbrauch und dergl. eingeschrieben werden, auch für die Fuhrparkorganisation einen brauchbarer Datenträger dar, der beispielsweise in wöchentlichen Intervallen in einer zentralen Fuhrpark-EDV gelesen und zusammen mit Transportbelegen nach fuhrparkorganisatorischen Gesichtspunkten ausgewertet werden kann.

Im folgenden sei das bevorzugte Ausführungsbeispiel der Erfindung anhand der Zeichnungen beschrieben.

Es zeigen

FIG. 1 eine perspektivische Darstellung des erfindungsgemäßen Fahrtschreibers,
FIG. 2 eine Ansicht einer Datenkarte,
FIG. 3 ein Blockschaltbild der verschiedenen Funktionsbaugruppen des Fahrtschreibers und
FIG. 4 eine Abbildung des Fahrtprotokolls.

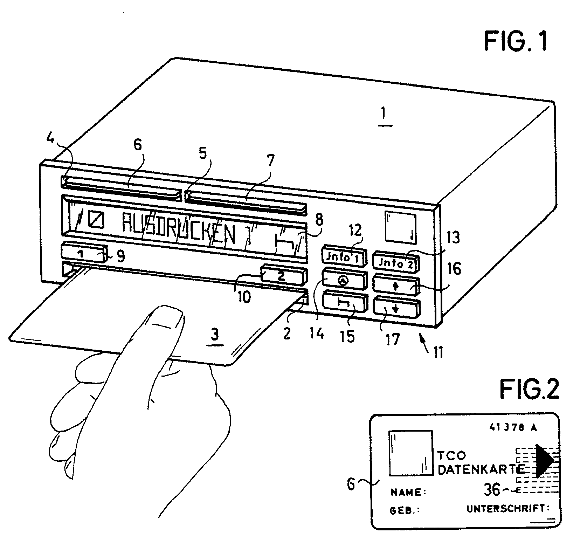

Wie FIG. 1 zeigt, weist der erfindungsgemäße Fahrtschreiber ein für den Einbau im Armaturenbrett eines Fahrzeuges geeignetes Einbaugehäuse 1 auf, an dessen Frontseite die Öffnung eines Einzugsschachtes 2 zum Einführen eines blattförmigen Druckträgers 3, Öffnungen von Aufnahmeschächten 4 und 5, die dem Einstecken von den Fahrern zugeordneten, beispielsweise gemäß FIG. 2 ausgebildeten Datenkarten 6 und 7 dienen, sowie eine als Zeilendisplay ausgebildete Anzeigeeinrichtung 8 sichtbar sind. Ferner ist jedem Fahrer eine Taste 9 bzw. 10 zugeordnet, mit denen - die Lenkzeiten werden automatisch erkannt - die Arbeitszustände, "Bereitschaftszeit" und "Ruhezeit" eingebbar sind. Mit einem Tastenfeld 11 kann sich, indem er die seiner momentanen Tätigkeit - Fahrer oder Beifahrer - entsprechende Taste 12 oder 13 betätigt, jeder Fahrer ein Fahrtprotokoll ausdrucken lassen, wenn er einen Druckträger 3 in den Einzugsschacht 2 eingeführt hat und/oder er kann sich, wenn er zusätzlich die mit dem Lenkzeitsymbol versehene Taste 14 betätigt, anzeigen lassen, wielange er das Fahrzeug bereits gelenkt hat bzw. bis zur nächst fälligen Lenkzeitunterbrechung noch lenken kann. Betätigt der betreffende Fahrer andererseits die mit dem Ruhezeitsymbol versehene Taste 15, so wird ihm beispielsweise angezeigt, wieviel Arbeitszeit noch verbleibt, bis die Tagesruhezeit einzuhalten ist. Die Tasten 16 und 17 dienen dem Anwählen und Sichtbarmachen der in den Datenkarten 6 und 7 eingeschriebenen Arbeitszeit-Datensätze.

Zweckmäßig wird es sein, das Systemprogramm des Fahrtschreibers derart zu gestalten, daß der Fahrtschreiber den Fahrer führt und ihm, um Verstößen gegen die Sozialvorschriften vorzubeugen, rechtzeitig anzeigt, unter Umständen auch akustisch signalisiert, daß er beispielsweise nach einer 4stündigen, ununterbrochenen Fahrt eine Pause einzulegen hat, seine Arbeitszeit beendet ist, die maximal zulässige Fahrstrecke erreicht und ein Fahrerwechsel fällig ist oder, um eine lückenlose Dokumentation der Fahrtdaten zu gewährleisten, der Ausdruck eines Fahrtprotokolls vorgenommen werden muß.

Letzerer Zustand zeigt FIG. 1, d.h. der Fahrer 1, der das Fahrzeug gelenkt hat oder lenken wird, wird im Klartext aufgefordert, einen Druckträger 3, der vom Fahrtschreiber eingezogen und mit dem Fahrtprotokoll bedruckt wird, vorzustecken. Außerdem wird mittels der üblichen Symbole angezeigt, daß für Fahrer 1 als Arbeitszeit gewertete Bereitschaftszeit und für Fahrer 2 den Beifahrer, Ruhezeit dann im Datenspeicher der jeweiligen Datenkarte 6 bzw. 7 eingeschrieben wird, wenn die betreffende Datenkarte 6, 7 dem Fahrtschreiber entnommen wird oder dem Fahrtschreiber durch Tastenbetätigung oder automatisch, d. h. fahrtabhängig, wobei dann für den Fahrer 1 ein Lenkzeitsymbol angezeigt werden könnte, mitgeteilt wird, daß sich der Arbeitszustand geändert hat.

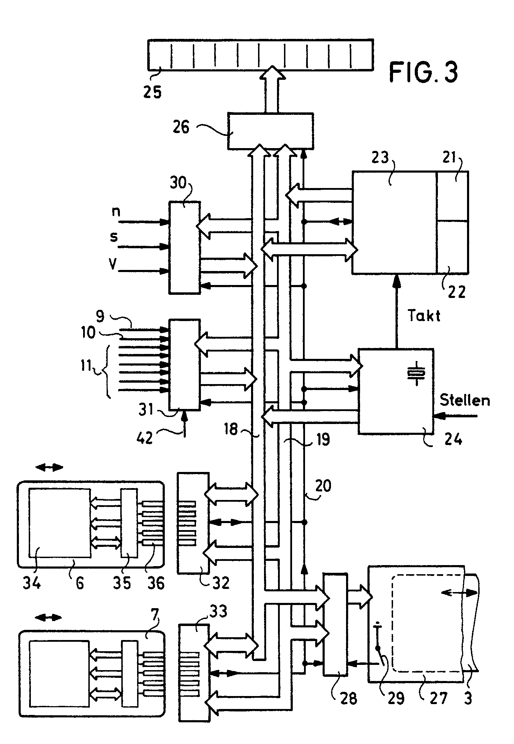

Das Blockschaltbild FIG. 3 zeigt, daß die verschiedenen Funktionsbaugruppen des erfindungsgemäßen Fahrtschreibers über ein Bussystem, bestehend aus einem Datenbus 18, einem Adressbus 19 und einem Kontrollbus 20 miteinander in Verbindung stehen. Im einzelnen sind dies ein ROM 21, in dem das Systemprogramm geladen ist, und ein RAM 22, der als Arbeitszeitspeicher dient und vorzugsweise durch eine nicht dargestellte Pufferbatterie gesichert ist, umfassender Mikroprozessor 23, ein Uhrzeit-Datum-Geber 24, eine für eine alphanumerische Darstellung ausgelegte Anzeigeeinrichtung 25, welche über einen multiplexenden Treiber 26 mit dem Bussystem 18, 19, 20 in Verbindung steht, eine vorzugsweise für Thermodruck eingerichtete Druckvorrichtung 27, der eine Schnittstellenschaltung 28 vorgeschaltet ist, und die einen vom Druckträger 3 betätigbaren Schalter 29 aufweist, eine Schnittstellenschaltung 30, über die verschiedene Meßgrößengeber, beispielsweise für die Motordrehzahl, den Kraftstoffverbrauch und wenigstens die zurückgelegte Strecke angekoppelt sind, eine Schnittstellenschaltung 31, die statische Geber, insbesondere das Tastenfeld 11 und die Tasten 9 und 10 mit dem Bussystem 18, 19, 20 verknüpft, sowie den Datenkarten 6 und 7 zugeordnete Koppeleinrichtungen 32 und 33.

Vorzugsweise wird als Datenkarte 6, 7, die, wie aus FIG. 2 hervorgeht, mit einem Handhabungspfeil, dem Namen und dem Geburtsdatum sowie der Unterschrift des Fahrers und dessen amtlich registrierter Fahrernummer versehen ist, eine Karte benutzt, in der ein EEPROM als Datenspeicher 34 und ein diesem zugeordneter Mikrocontroller 35 implantiert sind. Dieses System, das im Gegensatz zu einem ebenfalls denkbaren, batteriegepufferten RAM ohne Pufferung auskommt, allerdings auf Kosten einer begrenzten Gebrauchsdauer, worauf im folgenden noch näher eingegangen werden wird, gestattet eine serielle Datenübertragung zwischen dem Bussystem und dem Datenspeicher 34 und vermeidet somit eine sonst erforderliche Vielzahl verschleißanfälliger Steckkontakte, von denen einer mit 36 bezeichnet ist. Ferner enthält der Mikrocontroller 35 Programmabläufe, die der Datenverschlüsselung dienen, und er kann dahingehend genutzt werden, daß Funktionen des Mikroprozessors 23 in die Datenkarte 6 bzw. 7 verlegt werden.

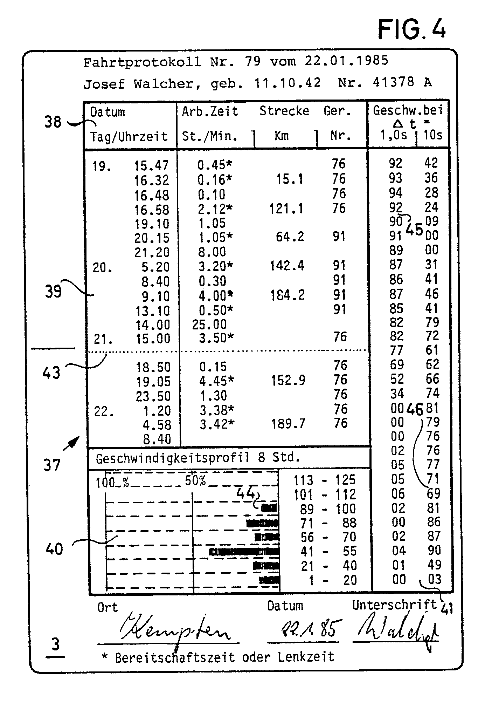

Wie aus FIG. 4 ersichtlich ist, erfolgt der tabellarische Ausdruck der ermittelten Daten des Fahrtprotokolls auf dem rechteckförmigen Druckträger 3 im wesentlichen innerhalb eines gleichzeitig erstellten Netzwerkes 37, das, abgesehen von einem Kopffeld 38, in welchem wörtliche Bezeichnungen der Daten ausgedruckt sind, drei Tabellenfelder bildet. Dabei dienen zwei gleich breite, im Hochformat aneinander schließende Tabellenfelder 39 und 40 der Aufnahme einerseits der Arbeitszeit-Datensätze, andererseits einer Geschwindigkeitsprofildarstellung, während ein der Gesamthöhe der beiden Tabellenfelder 39 und 40 entsprechendes und diesen seitlich zugeordnetes Tabellenfeld 41 für das Darstellen von Geschwindigkeitsmeßwerten vorgesehen ist. Ferner umfaßt das Fahrtprotokoll in zwei nicht näher bezeichneten Titelzeilen die Protokoll-Nr., das Ausgabe-Datum, Name und Geburtsdatum des Fahrers und dessen registrierte Fahrernummer sowie ein nachgestelltes, mit dem Hinweis, "Ort, Datum, Unterschrift" versehenes Freifeld zur handschriftlichen Dokumentation und Bemerkungen bezüglich besonders gekennzeichneter (*), beispielsweise für die Lohnabrechnung relevanter Daten.

Beim Ausdruck des Fahrtprotokolls werden die persönlichen Daten des Fahrers aus einem definierten Speicherbereich des Datenspeichers 34 der Datenkarte 6, 7, dem Identspeicher, abgefragt. Ebenso ist in dem Datenspeicher 34 der Datenkarte 6, 7 ein gewisser Speicherbereich als Indexspeicher festgelegt, der einen Protokollzähler umfaßt, der nach jedem Fahrtprotokollausdruck um "1" erhöht wird, während die Formalbezeichnungen und die Maße des Netzwerkes 37 im ROM 21 des Fahrtschreibers als Maskendaten gegebenenfalls in verschiedenen Varianten abgelegt sind.

An dieser Stelle sei eingeschoben, daß der dem Mikroprozessor 23 zugeordnete Arbeitsspeicher, das RAM 22, dem Fortschreiben insbesondere von das Fahrzeug betreffenden Langzeitdaten, wie Kraftstoffverbrauch, Kilometerstand, Überschreitungen der Motordrehzahl und andere auch bezüglich der Wartung des Fahrzeuges wichtiger Daten dient. Ferner wird in diesem Speicher der Kilometerstand bei Beginn einer Fahrt und die aktuelle Uhrzeit bei jeder Änderung des Arbeitszustandes festgehalten, damit bei einer nachfolgenden Änderung des Arbeitszustandes im Mikroprozessor 23 die Dfferenzen zu den dann aktuellen Datenständen errechnet werden können. Außerdem werden die vom Mikroprozessor 23 aus bei Fahrt streckenabhängig gelieferten Impulsen, beispielsweise mit einer Zeitbasis von 1 s gemessenen Geschwindigkeitswerte fortlaufend in das RAM 22 eingeschrieben, und es werden für Zeitraffungen unterschiedlichen Maßstabes verschiedene, gleichzeitig errechnete Durchschnittsgeschwindigkeitswerte hinterlegt. Im übrigen dient der Mikroprozessor 23 auch der Ermittlung der bereits genannten Informationen, "Restlenkzeit", "Beginn der Tagesruhezeit" und dergl. aus den im Datenspeicher 34 der Datenkarte 6, 7 gespeicherten Arbeitszeitdaten.

In einem weiteren Speicherbereich des Datenspeichers 34 der Datenkarte 6 bzw. 7, dem Arbeitszeitspeicher, sind die im Tabellenfeld 39 dargestellten Arbeitszeit-Datensätze eingeschrieben. Dabei wird ein vollständiger Arbeitszeit-Datensatz jeweils dann im Arbeitszeitspeicher abgelegt, wenn der Arbeitszustand sich ändert, d.h. der Mikroprozessor 23 ermittelt beispielsweise die Zeitdifferenz zwischen dem Beginn einer Fahrt, was durch das Auftreten von Wegimpulsen erkannt wird und zur Bildung einer lenkzeittypischen Adresse führt, und dem Stillstand des Fahrzeuges sowie die dabei zurückgelegte Strecke, ergänzt, nach einer gewissen Wartezeit, die, um Haltezeiten an Verkehrsampeln und in Verkehrsstaus zu unterdrücken, üblicherweise nicht als Lenkzeitunterbrechung gewertet wird, den bereits zu Beginn der Fahrt eingeschriebenen aus Uhrzeit und Geräte-Nr. bestehenden Teildatensatz zu einem aus Uhrzeit, Lenkzeit, zurückgelegter Strecke und Geräte-Nr. bestehenden, vollständigen Arbeitszeit-Datensatz und speichert gleichzeitig den zum Haltezeitpunkt generierten, aus Uhrzeit und Geräte-Nr. bestehenden Teildatensatz für den folgenden Arbeitszustand ab.

Auch bei der Erfassung der übrigen Arbeitszeit-Daten, also den Bereitschaftszeiten und den Ruhezeiten, ist eine Zeitverzögerung beim Ergänzen und somit Abschließen eines Arbeitszeit-Datensatzes und Einschreiben eines neuen Teildatensatzes in den Arbeitszeitspeicher zweckmäßig, weil dadurch vermieden werden kann, daß der ohnehin begrenzte, für die Arbeitszeit-Datensätze vorgesehene Druckbereich im Fahrtprotokoll - das Tabellenfeld 39 - durch nichtssagende oder falsche, beispielsweise durch irrtümliche Tastenbetätigung entstandene Arbeitszeit-Datensätze belegt wird. Lediglich bei Entnahme einer Datenkarte 6, 7 erfolgt der Abschluß des laufenden Arbeitszeit-Datensatzes unmittelbar mit dem Betätigen des Entnahmeschalters 42. Dabei kann das Entnehmen der Datenkarte 6, 7 um einen sicheren Abschluß der Datenübertragung zu gewährleisten, in geeigneter Weise mechanisch verzögert sein.

Die begrenzte Druckzeilenzahl im Tabellenfeld 39 des Fahrtprotokolls und die gesetzliche Forderung, daß eine lückenlose Arbeitszeit-Dokumentation nachweisbar sein muß, machen es im übrigen auch erforderlich, daß die Anzahl der seit dem letzten Fahrtprotokoll-Ausdruck im Arbeitszeitspeicher eingeschriebenen Arbeitszeit-Datensätze festgestellt wird, wofür im Indexspeicher weitere Speicherplätze reserviert sein können, und daß rechtzeitig vor Erreichen der im Tabellenfeld 39 maximal möglichen Druckzeilenzahl eine Aufforderung zum Ausdrucken des Fahrtprotokolls generiert wird. Denkbar ist in diesem Zusammenhang, daß, wenn die Aufforderung zum Ausdruck ansteht, die Datenkarte 6, 7 in geeigneter Weise verriegelt wird, also dem Fahrtschreiber erst entnommen werden kann, wenn der Ausdruck erfolgt ist. Zusätzlich ist ferner die Forderung denkbar, daß die Fahrtprotokolle analog der bisherigen Praxis nach jeweils einem bestimmten Zeitabschnitt zu erstellen sind, so daß im Indexspeicher weitere Speicherplätze zur Realisierung eines Stundenzählers freigehalten werden müssen.

Nach dem bisher Erläuterten läßt sich den Arbeitszeit-Datensätzen des Fahrtprotokolls gemäß FIG. 4, das am 22.01.1985 erstellt worden ist und das, da Kraftstoffverbrauch, Übertourungen und diverse Hinweise z. B. auf Nichtbefolgen einer Ausdruckaufforderung nicht ausgedruckt sind, lediglich die unbedingt nötigen Daten umfaßt, folgendes entnehmen:

Im jüngsten vollständigen Arbeitszeit-Datensatz ist eine Km-Angabe (189.7) enthalten, d.h. zum Zeitpunkt 4.58 Uhr wurde das betreffende Fahrzeug mit dem Fahrtscheiber Nr. 76 in Bewegung gesetzt und 3,42 h bis zum Halt um 8.40 Uhr gefahren. Zeitlich rückschreitend zeigt der nächst folgende Arbeitszeit-Datensatz, daß der Fahrer seit 1.20 Uhr in Bereitschaft war, somit 3,38 h voraussichtlich als Beifahrer tätig war und daß er zuvor, beginnend um 23.50 Uhr des vorausgegangenen Tages eine Ruhezeit von 1,30 h eingehalten hat. Der nächst folgende Arbeitszeit-Datensatz ist wiederum für eine Fahrt generiert, die um 19.05 Uhr begann und bei der 152.9 km zurückgelegt worden sind. Die für diese Fahrt ermittelte ununterbrochene Lenkzeit von 4,45 h überschreitet eindeutig die 4-Stunden-Grenze, d.h. hier liegt ein Verstoß gegen Arbeitszeitrichtlinien vor.

Vor dieser Fahrt hat der Fahrer von 8.50 Uhr bis 19.05 Uhr eine Ruhezeit von 15 min eingelegt und davor war er, beginnend um 15.00 Uhr, offensichtlich 3,15 h als Beifahrer tätig gewesen. Während dieser Zeit wurde möglicherweise im Zuge einer polizeilichen Kontrolle ein Fahrtprotokoll abgerufen, was durch eine mit einer punktierten Linie 43 versehene Leerzeile gekennzeichnet ist. Die älteren Arbeitszeitdaten sind somit bereits auf dem Fahrtprotokoll Nr. 78 vom 21.01.1985 ausgedruckt. Sie zeigen, daß der Fahrer, bevor er seinen Dienst am 21.01.1985 um 15,00 Uhr wieder aufnahm, am 20.01.1985 um 14.00 Uhr ein anderes Fahrzeug mit der Fahrtschreiber-Gerätenr. 91 für 25 h verlassen hat. Mit diesem Fahrzeug war er am 20.01.1985 von 9.10 Uhr bis 13.10 Uhr vier Stunden unterwegs, hat dabei 184.2 km zurückgelegt und hat anschließend noch 50 min eine andere Tätigkeit ausgeübt, bevor er seine Datenkarte dem Fahrtschreiber entnommen und seinen Arbeitsbereich "Fahrzeug" verlassen hat.

Wenn an dieser Stelle die Interpretation der Arbeitszeit-Datensätze der Wiederholungen wegen abgebrochen wird, wäre es noch interessant zu wissen, ob der Fahrer in dem interpretierten Zeitraum die gesetzlich vorgeschriebene Tagesruhezeit eingehalten hat, was für die Kontrollorgane eine entscheidende Frage darstellt und auf dem Fahrtprotokoll gesondert ausgeruckt werden könnte.

Bekanntlich bestehen je nach Beförderungsart und Fahrzeugausrüstung drei Tagesruhezeit-Kategorien. Im einen Falle müssen innerhalb von 24 h vor Arbeitsbeginn 10 zusammenhängende Stunden Ruhezeit liegen, in einem weiteren Falle innerhalb von 27 h ebenfalls 10 h und in einem dritten Falle innerhalb von 30 h 8 h ununterbrochene Ruhezeit.

Ausgehend vom Anhaltezeitpunkt des Fahrzeuges 8.40 Uhr zeigt sich, daß der Fahrer nur dann nicht gegen die Vorschrift verstößt, wenn er ein Fahrzeug der letzteren Kategorie steuert, das mit zwei Fahrern besetzt und mit einer Schlafkabine ausgerüstet sein muß.

Hinsichtlich der Gestaltung des Fahrtprotokolls sei noch erwähnt, daß zwischen den Arbeitszeit-Datensätzen, insbesondere nach längeren Ruhezeiten, Leerzeilen vorgesehen werden können, in die handschriftliche Bemerkungen, beispielsweise Urlaub, Fehlzeiten durch Krankheit oder Arbeitszeiten, die nicht vom Fahrtschreiber erfaßt werden konnten, eingetragen werden können.

Im Datenspeicher 34 der Datenkarte 6 bzw. 7 ist ferner ein als Profilspeicher bezeichneter Speicherbereich vorgesehen, in den die der Bildung eines Geschwindigkeitsprofils dienenden, nach einem bestimmten Rechenmodus vom Mikroprozessor 23 ermittelten Werte von acht festgelegten Geschwindigkeitsgruppen eingelesen werden. Das im Tabellenfeld 40 dargestellte, über einen Zeitraum von 8 h aufgenommene Geschwindigkeitsprofil zeigt, abgesehen von einer Aussage über in der Regel befahrene Straßentypen und somit die Nutzung des Fahrzeuges, daß der Fahrer, wenn es sich, wie bei der obigen Ruhezeitbetrachtung nicht um einen Bus, sondern um ein schweres Transportfahrzeug handelt, nicht mehr vernachlässigbare Geschwindigkeitsüberschreitungen (Balken 44) eingefahren hat.

Ein anderer Speicherbereich des Datenspeichers 34 der Datenkarte 6 bzw. 7, der Geschwindigkeitsspeicher, dient dem fortlaufenden Einschreiben der gleichzeitig im RAM 22 gespeicherten Geschwindigkeitswerte, d.h. der Echtzeitspeicherung der tatsächlichen Geschwindigkeitsmeßwerte, wobei die Meßbasis von 1 s die gefahrene Geschwindigkeit auch für eine Unfallauswertung ausreichend auflöst, der Speicherung von Geschwindigkeitsdurchschnittswerten mit einer Zeitbasis von beispielsweise 10 s, die bereits einen erheblich erweiterten Zeithorizont bei, im Vergleich mit der visuellen Auswertbarkeit analoger Diagrammscheiben-Aufzeichnungen,noch verhältnismäßig hohe Auflösung sowie einer Speicherung von Geschwindigkeitsdurchschnittswerten mit einer Zeitbasis von beispielsweise 5 Min., mit der wenigstens die täglich zulässige Lenkzeit eines Fahrers erfaßbar ist.

Um auch in dem Fahrtprotokoll möglichst weite Zeithorizonte darstellen zu können, entspricht das für die Geschwindigkeitsdarstellung vorgesehene Tabellenfeld 41 der im Fahrtprotokoll maximal möglichen Länge. Der Einfachheit halber sind in FIG. 4 nur zwei Spalten Geschwindigkeitswerte ausgedruckt. Es stehen in der einen Spalte 45 die tatsächlichen Geschwindigkeitsmeßwerte, in der anderen Spalte 46 die der Zeitbasis 10 s entsprechenden Durchschnittswerte.

Aus der Spalte 45 ist ersichtlich, daß der Fahrer etwa 15 s vor dem endgültigen Halt um 8.40 Uhr eine relativ starke Bremsung eingeleitet und danach noch zwei Rangierbewegungen mit dem Fahrzeug vorgenommen hat. Denkbar ist auch, daß eine Notbremsung erforderlich war, bei der es zu einem Blockieren der Räder kam und erst nach zwei weiteren Bremsungen das Fahrzeug zum Stillstand gebracht werden konnte.

Diese für eine evtl. Unfallauswertung, für die weder Spezialgeräte, noch Spezialisten erforderlich sind, entscheidenden Geschwindigkeitsinformationen dürfen selbstverständlich nicht durch Generieren weiterer 00-Geschwindigkeitswerte aus dem Geschwindigkeitsspeicher herausgeschoben werden. Es ist daher vorgesehen, nach beispielsweise fünf 00-Geschwindigkeitswerten, d.h. wenn eindeutig der Stillstand des Fahrzeuges angenommen werden kann, das Einlesen von 00-Geschwindigkeitswerten zu unterbrechen und bei einem erneuten Start des Fahrzeuges zunächst die Startzeit in den Geschwindigkeitsspeicher einzulesen.

Der Vollständigkeit halber sei noch erwähnt, daß die im Sekundentakt erfolgende Echtzeitspeicherung der Geschwindigkeitsmeßwerte im Datenspeicher 34 - will man einen zufriedenstellenden Zeithorizont verwirklichen - einen erheblichen Speicherplatzbedarf zur Folge hat, der jedoch wegen der übrigen Speicheraufgaben und der begrenzten Speichergesamtkapazität von 2k Byte nur bedingt zur Verfügung steht. Andererseits ist, wie bereits angedeutet wurde, die Gebrauchsdauer von EEPROMs begrenzt, und zwar durch eine bestimmte Anzahl von Löschungen/Speicherzelle, so daß bei gegebenem Speicherplatzangebot ein Kompromiß zu finden ist zwischen Gebrauchsdauer der Datenkarte 6, 7 und dem Zeittakt der Echtzeitspeicherung der Geschwindigkeitsmeßwerte, d.h. der Genauigkeit der Geschwindigkeitsmessung, auf die es jedoch im Hinblick auf eine zuverlässige Unfallauswertung in erheblichem Maße ankommt.

Die folgende Überschlagsrechnung zeigt die Zusammenhänge:

```
Geht man davon aus,
die Lenkzeit/Woche                                          48 h
dann würde sie/Jahr betragen         45 x 48 =      2.160 h.
Die Anzahl der Löschzyklen/Speicher-
zelle kann heute angenommen werden mit      50.000.
Die gewünschte Gebrauchsdauer der Daten-
karte 6, 7 soll mindestens betragen         3 Jahre.
Daraus ergibt sich ein auf der Daten-
karte zu realisierender Zeithorizont von
```

$$T = \frac{3a \times 2160h}{50.000} = 466\ s$$

```
Bei einem Meßtakt von 1/s erfordert dieser
Zeithorizont einen Speicherplatzbedarf von      466 x 8 Bit.
```

Dieser Speicherplatzbedarf ist auf der Datenkarte problemlos realisierbar, so daß bei sonst gleichen Bedingungen auch eine Gebrauchsdauergrenze von 4 Jahren in Erwägung gezogen werden könnte.

Dieses Rechenbeispiel zeigt ferner, daß die Gebrauchsdauer der Datenkarte 6, 7 bzw. des Datenspeichers 34 und der zu realisierende Zeithorizont direkt proportional sind und daß, wird beispielsweise eine höhere Meßgenauigkeit angestrebt, entweder die Erwartungen an die Gebrauchsdauer eingeschränkt oder mehr Speicherplatz vorgesehen werden müssen. Anders ausgedrückt, daß die begrenzte Speicherkapazität der Datenkarte 6, 7 eine begrenzte Gebrauchsdauer zur Folge hat und daß diese Größe in geeigneter Weise zu überwachen ist. Als Maß hierfür bietet sich die stundenweise kumulierte Gesamtlenkzeit an, für die im Indexspeicher der erforderliche Speicherplatz bereitgehalten werden muß. Die Gebrauchsdauer der Datenkarte 6, 7 bzw. des Datenspeichers 34 wird aber auch durch die Kontaktelemente bestimmt, für die derzeit eine Anzahl von 5.000 Steckungen angegeben wird und zu deren Überwachung zweckmäßigerweise ebenfalls im Indexspeicher ausreichend Speicherplatz bereitgestellt werden müßte.

Somit ist im Indexspeicher wenigstens Speicherplatz bereitzuhalten für einerseits die kumulierte Gesamtlenkzeit und die Anzahl der Kartensteckungen als charakteristische Größen für die Gebrauchsdauer der Datenkarte 6, 7, andererseits die Anzahl der Arbeitszeit-Datensätze, die Anzahl der ausgedruckten Fahrtprotokolle und die Zeit nach dem letzten Fahrtprotokoll-Ausdruck als kennzeichnende Größen für eine lückenlose Arbeitszeit-Dokumentation.

Bedingt durch die begrenzte Anzahl von Überschreibungen und die relativ geringe Speicherkapazität, d. h. bedingt durch das Gebrauchsdauer-Problem des in der Datenkarte 6, 7 implantierten EEPROM-Datenspeichers, ist es zweckmäßig, die Daten des Indexspeichers und vorzugsweise aber auch die Daten des Profilspeichers nicht im Datenspeicher 34 der Datenkarte 6, 7 fortzuschreiben, sondern hierfür den Arbeitsspeicher des Fahrtschreibers, das RAM 22, zu verwenden und die jeweils aktuellen Datenstände erst dann in die bereitgehaltenen Speicherbereiche des Datenspeichers 34 der Datenkarte 6, 7 einzuschreiben, wenn die Datenkarte 6, 7 dem Fahrtschreiber entnommen werden soll und dies durch Betätigen eines Entnahmeschalters 42 signalisiert wurde. Andererseits werden die Daten des Indexspeichers und des Profilspeichers, wenn die Datenkarte 6, 7 erneut in den gleichen oder einen anderen Fahrtschreiber eingeführt ist, in dessen Arbeitsspeicher zurückgeladen und dort fortgeschrieben bzw. neu erstellt.

**Patentansprüche**

1. Fahrtschreiber für Kraftfahrzeuge,
mit einem Mikroprozessor zur Ermittlung von Fahrdaten wie Strecke und Geschwindigkeit, aus Gebersignalen,
mit einem mit dem Mikroprozessor verbundenen Uhrzeit-Datum-Geber zur Lieferung von Arbeitszeitdaten, wie Lenkzeit oder Ruhezeit etc.,
mit den Fahrern zugeordneten und in den Fahrtschreiber einführbaren Datenkarten (6,7) und
mit einer Druckvorrichtung (3)
dadurch gekennzeichnet,
daß jede Datenkarte (6, 7) einen Datenspeicher (34) aufweist, in den zusätzlich zu bereits eingespeicherten, fahrerspezifischen Daten auch die Fahrtdaten und die Arbeitszeitdaten einspeicherbar sind,

daß Mittel (9, 10) vorgesehen sind, über die Änderungen des Arbeitszustandes eines Fahrers von Hand in den Fahrtschreiber eingebbar sind, die zusammen mit den vom Uhrzeit-Datum-Geber gelieferten Arbeitszeitdaten in den Datenspeicher (34) der Datenkarte (6, 7) übertragen werden und

daß durch Einziehen eines Druckträgers (3) in einen frontseitig am Fahrtschreiber ausgebildeten Einzugsschacht (2) der Ausdruck eines tabellarischen Fahrtprotokolls ausgelöst wird, dessen Daten aus dem Datenspeicher (34) der Datenkarte (6, 7) ausgelesen werden.

2. Fahrtschreiber nach Anspruch 1,
dadurch gekennzeichnet,
daß im Datenspeicher (34) ein Speicherbereich vorgesehen ist, in den fortlaufend wenigstens Geschwindigkeitsmeßwerte in Zeitintervallen von größenordnungsmäßig 1 s eingeschrieben werden.

3. Fahrtschreiber nach Anspruch 1,
dadurch gekennzeichnet,
daß abhängig von einer bestimmten in dem Datenspeicher (34) abgelegten Anzahl von Arbeitszeit Datensätzen (39) der Ausdruck des Fahrtprotokolles ausgelöst wird.

4. Fahrtschreiber nach Anspruch 1,
dadurch gekennzeichnet,
daß über einen durch den Druckträger (3) betätigbaren Schalter (29) sowie über eine Taste (12, 13) der Ausdruck des Fahrtprotokolles ausgelöst wird.

5. Fahrtschreiber nach Anspruch 1,
dadurch gekennzeichnet,
daß ein quaderförmiges Einbaugehäuse (1) vorgesehen ist, daß der dem Druckträger (3) zugeordnete Einzugsschacht (2) im wesentlichen in einer Ebene quer zur Hochachse des Einbaugehäuses (1) angeordnet ist und
daß zwei den Datenkarten (6. 7) von Fahrer und Beifahrer zugeordnete Aufnahmeschächte (4, 5) in einer zum Einzugsschacht (2) parallelen Ebene ausgebildet sind.

6. Fahrtschgreiber nach Anspruch 1,
dadurch gekennzeichnet,
daß als Datenspeicher (34) ein Halbleiterspeicher, insbesondere ein EEPROM Anwendung findet.

## Claims

1. Tachograph for motor vehicles, having a microprocessor for determining travel data such as distance and speed from generator signals, having a time/date generator connected to the microprocessor, for the supply of work time data, such as driving time or rest time, etc., having data cards assigned to the drivers and insertable in the tachograph, and having a printing device, characterized in that each data card (6, 7) has a data memory (34) in which, in addition to already stored driver-specific data, the travel data and the work time data may also be stored, in that means (9, 10) are provided through which changes in the working state of a driver may be entered by hand in the tachograph and are transferred, together with the work time data supplied by the time/date generator, to the data memory (34) of the data card (6, 7), and in that by introducing a print carrier (3) into an introduction slot (2) constructed on the front side of the tachograph the printout of a travel log in tabular form is triggered, the data of which is read from the data memory (34) of the data card (6, 7).

2. Tachograph according to Claim 1, characterized in that there is provided in the data memory (34) a memory area to which at least measured speed values are continuously written at time intervals in the order of magnitude of 1 s.

3. Tachograph according to Claim 1, characterized in that, in dependence on a particular number of work time data sets (39) stored in the data memory (34), printing out of the travel log is triggered.

4. Tachograph according to Claim 1, characterized in that printing out of the travel log is triggered via a switch (29) which may be actuated by the print carrier (3) and by way of a key (12, 13).

5. Tachograph according to Claim 1, characterized in that a parallelepiped installation housing (1) is provided, in that the introduction slot (2) associated with the print carrier (3) is arranged substantially in a plane transverse to the vertical axis of the installation housing (1), and in that two receiving slots (4, 5) allocated to the data cards (6, 7) of driver and co-driver are constructed in a plane parallel to the introduction slot (2).

6. Tachograph according to Claim 1, characterized in that a semiconductor memory, in particular an EEPROM, is used as the data memory (34).

**Revendications**

1. Enregistreur de route pour véhicules automobiles, avec un microprocesseur pour la détermination de paramètres de route tels que distance parcourue et vitesse, à partir de signaux de capteurs, avec un générateur d'heure/date relié audit microprocesseur et destiné à fournir des données de temps de travail telles que durée de conduite ou temps de repos etc., avec des cartes de données attribuées aux conducteurs et pouvant être insérées dans l'enregistreur de route et avec un dispositif d'impression, caractérisé par le fait
que chaque carte de données (6, 7) présente une mémoire de données (34) dans laquelle peuvent aussi être stockées, en plus des données spécifiques au conducteur déjà mémorisées, les paramètres de route et les données de temps de travail, qu'il est prévu des moyens (9, 10) permettant de faire entrer manuellement dans l'enregistreur de route des changements de la situation de travail d'un conducteur qui seront transférés, conjointement avec les données de temps de travail fournies par le générateur d'heure/date, à la memoire de données (34) de la carte de données (6, 7) et
que l'insertion d'un support d'impression (3) dans un puits d'introduction (2) disposé sur la face frontale de l'enregistreur de route déclenche l'édition d'un protocole de route sous forme de tableau dont les données sont extraites de la mémoire de données (34) de la carte de données (6, 7).

2. Enregistreur de route selon la revendication 1,
caractérisé par le fait
que dans la mémoire de données (34) est prévue une zone d'enregistrement dans laquelle sont inscrites, en continu, au moins des paramètres de mesure de vitesse en des intervalles de temps de l'ordre de grandeur de 1 s.

3. Enregistreur de route selon la revendication 1,
caractérisé par le fait
que l'édition du protocole de route est déclenchée en fonction d'un nombre déterminé de jeux de données de temps de travail (39) stockés dans la mémoire de données (34).

4. Enregistreur de route selon la revendication 1,
caractérisé par le fait
que l'édition du protocole de route est déclenché par l'intermédiaire d'un interrupteur (29) pouvant être actionné par le support d'impression (3) ainsi que par l'intermédiaire d'une touche (12, 13).

5. Enregistreur de route selon la revendication 1,
caractérisé par le fait
qu'il est prévu un boîtier d'encastrement parallélépipédique (1),
que le puits d'introduction (2) associé au support d'impression (3) est disposé, pour l'essentiel, dans un plan transversal par rapport à l'axe de hauteur du boîtier d'encastrement (1) et
que deux puits de réception (4, 5) associés aux cartes de données (6, 7) du conducteur et du convoyeur sont disposés dans un plan parallèle au puits d'introduction (2).

6. Enregistreur de route selon la revendication 1,
caractérisé par le fait
que la mémoire de données (34) utilisée est une mémoire à semi-conducteurs, de préférence une EEPROM.

FIG. 1

FIG.2

FIG.3

# FIG. 4

Fahrtprotokoll Nr. 79 vom 22.01.1985

Josef Walcher, geb. 11.10.42   Nr. 41378 A

| Datum | Arb.Zeit | Strecke | Ger. | Geschw.bei $\Delta t =$ | |
|---|---|---|---|---|---|
| Tag/Uhrzeit | St./Min. ] | Km | Nr. | 1,0s | 10s |
| 19.   15.47 | 0.45* | | 76 | 92 | 42 |
| 16.32 | 0.16* | 15.1 | 76 | 93 | 36 |
| 16.48 | 0.10 | | 76 | 94 | 28 |
| 16.58 | 2.12* | 121.1 | 76 | 92 | 24 |
| 19.10 | 1.05 | | | 90 | 09 |
| 20.15 | 1.05* | 64.2 | 91 | 91 45 00 |  |
| 21.20 | 8.00 | | | 89 | 00 |
| 20.    5.20 | 3.20* | 142.4 | 91 | 87 | 31 |
| 8.40 | 0.30 | | 91 | 86 | 41 |
| 9.10 | 4.00* | 184.2 | 91 | 87 | 46 |
| 13.10 | 0.50* | | 91 | 85 | 41 |
| 14.00 | 25.00 | | | 82 | 79 |
| 21.   15.00 | 3.50* | | 76 | 82 | 72 |
| | | | | 77 | 61 |
| 18.50 | 0.15 | | 76 | 69 | 62 |
| 19.05 | 4.45* | 152.9 | 76 | 52 | 66 |
| 23.50 | 1.30 | | 76 | 34 | 74 |
| 22.    1.20 | 3.38* | | 76 | 00 46 81 |  |
| 4.58 | 3.42* | 189.7 | 76 | 00 | 79 |
| 8.40 | | | | 00 | 76 |

Geschwindigkeitsprofil 8 Std.

| | | | | | |
|---|---|---|---|---|---|
| 100_% | 50% | 44 | 113 - 125 | 02 | 76 |
| | | | 101 - 112 | 05 | 77 |
| | | | 89 - 100 | 05 | 71 |
| | | | 71 - 88 | 06 | 69 |
| | | | 56 - 70 | 02 | 81 |
| | | | 41 - 55 | 00 | 86 |
| | | | 21 - 40 | 02 | 87 |
| | | | 1 - 20 | 04 | 90 |
| | | | | 01 | 49 |
| | | | | 00 | 03 |

Ort                    Datum              Unterschrift

*Kempten*           *22.1.85*         *Walcher*

* Bereitschaftszeit oder Lenkzeit